# EUROPÄISCHE PATENTSCHRIFT

(11) **EP 0 564 911 B1**
(45) Veröffentlichungstag und Bekanntmachung des Hinweises auf die Patenterteilung: **20.06.2001**
(21) Anmeldenummer: 93104866.4
(22) Anmeldetag: 24.03.1993
(51) Int. Cl.: C08J 7/04, G03C 1/89

(54) **Antistatische Kunststoffteile**
Antistatic plastic parts
Pièces antistatiques en matière plastique

(30) Priorität: 06.04.1992 DE 4211461
(43) Veröffentlichungstag der Anmeldung: 13.10.1993
(73) Patentinhaber: AGFA-GEVAERT N.V., 2640 Mortsel (BE)
(72) Erfinder: Krafft, Werner, Dr., W-5090 Leverkusen 1 (DE); Jonas, Friedrich, Dr., W-5100 Aachen (DE); Muys, Bavo, B-2640 Mortsel (BE); Quintens, Dirk, Dr., B-2500 Lier (BE)

(56) Entgegenhaltungen:
- EP-A- 0 127 820
- EP-A- 0 440 957
- DATABASE WPI Week 9018, Derwent Publications Ltd., London, GB; AN 90-134685 & JP-A-2 081 032 (TOYOTA CENT RES. & DEV.; TOYODA GOSEI KK) 22. März 1990
- DATABASE WPI Week 9231, Derwent Publications Ltd., London, GB; AN 92-254080 & JP-A-4 170 493 (MITSUBISHI PAPER MILLS LTD.) 18. Juni 1992
- RESEARCH DISCLOSURE Bd. 334, Nr. 83 , 28. Februar 1992 , ENGLAND Seiten 155 - 159 XP291266 ANONYMOUS 'Thermal Dye Sublimation Transfer'

## Beschreibung

Die Erfindung betrifft eine haftfeste Antistatikausrüstung für Kunststoff-Formteile, z.B. fotografische Filmunterlagen, auf der Basis von Polythiophen-Zubereitungen.

Es ist bekannt, Zubereitungen von Polythiophenen, die Polyanionen enthalten, zur antistatischen Ausrüstung von Kunststoff-Formteilen, insbesondere von Trägern für fotografische Materialien, einzusetzen (EP-440 957). Es hat sich nun gezeigt, daß bei ausgezeichneter antistatischer Wirkung die Antistatikschicht Nachteile in der Haftfestigkeit aufweist.

Aufgabe der Erfindung war es, diesen Nachteil zu beheben, ohne die antistatische Wirkung zu beeinträchtigen.

Diese Aufgabe wird überraschenderweise dadurch gelost, daß man auf die antistatisch auszurüstende Oberfläche des Kunststoff-Formteils wenigstens zwei Schichten aufbringt, wobei eine näher zur Kunststoffoberfläche liegende Schicht eine Zubereitung eines Polythiophens, das aus Struktureinheiten der Formel 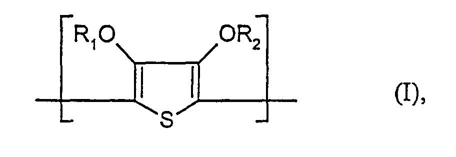 aufgebaut ist, in der
- R₁ und R₂: unabhängig voneinander für Wasserstoff oder eine C₁-C₄-Alkylgruppe stehen oder zusammen einen gegebenenfalls substituierten C₁-C₄-Alkylen-Rest, vorzugsweise einen gegebenenfalls durch Alkylgruppen substituierten Methylen-, einen gegebenenfalls durch C₁-C₁₂-Alkyl- oder Phenylgruppen substituierten Ethylen-1,2-Rest, einen Propylen-1,3-Rest oder einen Cyclohexylen-1,2-Rest bilden,
und eines Polyanions, eine entfernter liegende Schicht ein filmbildendes Polymer und beide Schichten oder wenigstens die entfernter liegende Schicht ein Silan der Formel (II)

X₄₋ₘ-Si(OR₃)ₘ (II)

worin
- R₃: ein Wasserstoffatom, einen aliphatischen Kohlenwasserstoffrest mit weniger als 10 Kohlenstoffatomen oder einen Acylrest mit weniger als 10 Kohlenstoffatomen,
- X: 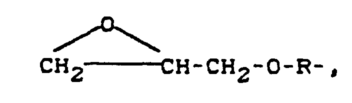 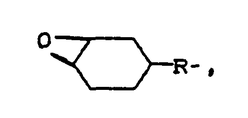 NH₂-R-, NH₂-CH₂-CH₂-NH-R- oder R―
- R: einen Kohlenwasserstoffrest mit 1 bis 20 C-Atomen, und
- m: 1 bis 3 bedeuten,
enthält.

Als Vertreter der gegebenenfalls substituierten C₁-C₄-Alkylenreste, die R₁ und R₂ zusammen bilden können, seien vorzugsweise die Alkylen-1,2-Reste genannt, die sich von den 1,2-Dibrom-alkanen ableiten, wie sie beim Bromieren von α-Olefinen, wie Ethen, Propen-1, Hexen-1, Octen-1, Decen-1, Dodecen-1 und Styrol erhältlich sind; außerdem seien genannt der Cyclohexylen-1,2-, Butylen-2,3-, 2,3-Dimethyl-butylen-2,3- und Pentylen-2,3-Rest.

Bevorzugte Reste für R₁ und R₂ gemeinsam sind der Methylen-, Ethylen-1,2- und Propylen-1,3-Rest, besonders bevorzugt ist der Ethylen-1,2-Rest.

Als Polyanionen für das Polythiophen dienen die Anionen von polymeren Carbonsäuren, wie Polyacrylsäuren, Polymethacrylsäuren, oder Polymaleinsäuren und polymeren Sulfonsäuren, wie Polystyrolsulfonsäuren und Polyvinylsulfonsäuren. Diese Polycarbon- und-sulfonsäuren können auch Copolymere von Vinylcarbon- und Vinylsulfonsäuren mit anderen polymerisierbaren Monomeren, wie Acrylsätireestern und Styrol, sein.

Das Molekulargewicht der die Polyanionen liefernden Polysäuren beträgt vorzugsweise 1 000 bis 2 000 000, besonders bevorzugt 20 000 bis 200 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben-Weyl, Methoden der organischen Chemie, Bd. E 20 Makromolekulare Stoffe, Teil 2, (1987), S. 1141 u.f.).

Anstelle der für die Bildung der Zubereitungen aus Polythiophenen und Polyanionen erforderlichen freien Polysäuren, kann man auch Gemische aus Alkalisalzen der Polysäuren und entsprechenden Mengen an Monosäuren einsetzen.

Die Zubereitungen können echte Lösungen, kolloidale Lösungen oder feinteilige Dispersionen sein.

Die Herstellung dieser Zubereitungen ist in EP-A-0 440 957 beschrieben.

Als Lösungsmittel der Polythiophen-Zubereitungen kommen neben Wasser auch andere protische Lösungsmittel in Betracht, z.B. niedere Alkohole wie Methanol, Ethanol und Isopropanol sowie Mischungen von Wasser mit niederen Alkoholen und anderen mit Wasser mischbaren organischen Lösungsmittel wie Aceton.

Den Polythiophen-Zubereitungen können weiterhin anionische, kationische oder nichtionische Tenside zugesetzt werden. Die Zugabe kann vor, während oder nach der Herstellung der Polythiophen-Zubereitungen erfolgen. Die zugesetzte Tensidmenge beträgt 0 bis 20 Gew.-%, bevorzugt 0 bis 5 Gew.-%, bezogen auf den Gesamtfeststoffgehalt der Polythiophen-Zubereitungen. Bevorzugt werden als Tenside Alkylphenolpolyglykoläther, z.B. ein Ethoxylierungsprodukt aus 4 Mol Ethylenoxid und 1 Mol Nonylphenol, verwendet.

Die Polythiophen-Zubereitungen können zur Antistatikausrüstung der Kunststoff-Formteile und -folien auf diese nach bekannten Verfahren, z.B. durch Tränken, Gießen, Besprühen, Tiefdruck, Rakeln, Streichen usw. aufgebracht werden. Nach dem Entfernen des Lösungsmittels, z.B. des Wassers, liegt unmittelbar die von dem Polythiophen auf der behandelten Unterlage gebildete, von der Luftfeuchtigkeit unabhängige antistatische Schicht vor.

Zur Erzielung besser haftender und kratzfester Beschichtungen können den Polythiophen-Salz-Zubereitungen auch noch wasserlösliche, bzw. in Wasser suspendierbare polymere Bindemittel, z.B. Polyvinylalkohol oder Polyvinylacetat-Dispersionen zugesetzt werden.

Bei säureempfindlichen Kunststoff-Formteilen und zur Schonung der zum Aufbringen verwendeten Geräte kann es vorteilhaft sein, in den Polythiophen-Salz-Zubereitungen vor dem Aufbringen auf die Kunststoff-Unterlage überschüssige freie Säuregruppen durch Zugabe von Alkalioder Erdalkalihydroxiden, Ammoniak oder Aminen zu neutralisieren.

Die Dicke der Schichten, in denen die Polythiophen-Dispersionen auf die antistatisch auszurüstenden Kunststoff-Formteile und -folien aufgebracht werden, beträgt nach dem Trocknen in Abhängigkeit von der gewünschten Leitfähigkeit des Formkörpers und der gewünschten Transparenz der Beschichtung 0,001 bis 100 µm, bevorzugt 0,001 bis 0,5 µm.

Das Entfernen der Lösungsmittel nach dem Aufbringen der Lösungen kann durch einfaches Abdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen von 20 bis zu 150°C, bevorzugt 40 bis 100°C, zu entfernen.

Die Herstellung der Polythiopheudispersionen kann in Gegenwart von Polymerlatices bzw. Polymerdispersionen erfolgen, die saure Gruppen (Salze) wie -SO₃-, -COO-, -PO₃²- aufweisen. Der Gehalt an sauren Gruppen liegt vorzugsweise über 2 Gew.-%, um eine ausreichende Stabilität der Dispersion zu gewährleisten. Die Teilchengrößen der Dispersionen liegen im Bereich von 5 nm bis 1 µm, vorzugsweise im Bereich von 5 bis 100 nm.

Polymere die für diesen Zweck geeignet sind werden beispielsweise in DE-A 25 41 230, DE-A 25 41 274, DE-A 28 35 856, EP-A-0 014 921, EP-A-0 069 671, EP-A-0 130 115, US-A-4 291 113 beschrieben.

Die Polymerdispersionen bzw. Latices können aus linearen, verzweigten oder vernetzten Polymeren bestehen. Die vernetzten Polymerlatices mit hohem Gehalt an sauren Gruppen sind in Wasser quellbar und werden als Mikrogele bezeichnet. Derartige Mikrogele werden beispielsweise in US 4 301 240, US 4 677 050 und US 4 147 550 beschrieben.

Als Substrate, die erfindungsgemäß antistatisch bzw. elektrisch-leitfähig ausgerüstet werden, seien vor allem Formkörper aus organischen Kunststoffen, insbesondere Folien aus Polycarbonaten, Polyamiden, Polyethylenen, Polypropylenen, Polyvinylchlorid, Polyestern, Celluloseacetat und Cellulose genannt, aber auch anorganische Werkstoffe, z.B. Glas oder keramische Wirkstoffe aus Aluminiumoxid und/oder Siliciumdioxid sind nach dem erfindungsgemäßen Verfahren antistatisch ausrüstbar.

Die Polythiophendispersionen können auch zur antistatischen Ausrüstung von heißsiegelfähigen Folien, wie sie in DE-A 38 38 652 beschrieben sind, und zur antistatischen Ausrüstung magnetischer Aufzeichnungsmaterialien eingesetzt werden.

Weiterhin können die erfindungsgemäßen Schichten als elektrisch leitfähige Schicht auf Kunststoffteilen bei der elektrostatischen Lackierung dieser Kunststoffteile z.B. im Automobilbau eingesetzt werden.

Wegen ihrer Transparenz eignen sich die erfindungsgemäß erhältlichen Beschichtungen insbesondere zur antistatischen Ausrüstung von fotografischen Materialien, insbesondere Filmen, z.B. Schwarz-Weiß-, Colornegativ- und Umkehrfilmen, vorzugsweise in Form einer Rückseitenschicht, das heißt, in einer Schicht, die auf der den Silberhalogenidemulsionsschichten abgewandten Seite des Schichtträgers aufgebracht wird.

Die Polythiophendispersion wird vorzugsweise in einer Menge von 0,001 bis 0,3 g/m², vorzugsweise 0,001 bis 0,03 g Feststoff pro m² aufgetragen.

Bevorzugte Silane entsprechen den Formeln 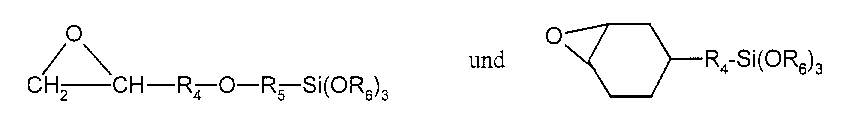 wobei
- R₄ und R₅: unabhängig voneinander Alkylenreste mit 1 bis 4 Kohlenstoffatomen bedeuten, und
- R₆: ein Wasserstoffatom oder einen Alkylrest mit 1 bis 10 Kohlenstoffatomen darstellt.

Die Silane werden in einer Menge von 1 bis 300 Gew.-%, bevorzugt 10 bis 100 Gew.-%, bezogen auf den Feststoff der Polythiophenzubereitung, der entfernteren Schicht oder beiden Schichten zugegeben.

Vorzugsweise werden wenigstens 40 Gew.-% des Silans der entfernter liegenden Schicht zugegeben.

Geeignete filmbildende polymere Stoffe der entfernter liegenden Schicht sind z.B. Cellulosederivate wie Cellulosediacetat, Cellulosetriacetat, Celluloseacetopropionat, Methylcellulose oder Ethylcellulose, insbesondere Cellulosediacetat.

Weiterhin geeignet sind Polyacrylate, Polymethylmethacrylate, Polyurethane, durch ionisierende Strahlung härtbare Lacksysteme, Polystyrol oder Copolymerisate der zugrundeliegenden Monomeren.

Außerdem können der entfernteren Schicht weitere Stoffe wie Gleitmittel, z.B. Polyethylendispersionen, Abstandshalter wie z.B. Polyacrylatkügelchen oder feinteilige anorganische Pigmente zugesetzt sein.

Die entfernter liegende Schicht wird als Lösung in organischen Lösungsmitteln wie Alkoholen, Ketonen, Kohlenwasserstofffen, chlorierten Kohlenwasserstoffen oder in Form wäßriger Lösung oder Dispersion aufgebracht.

Es können auch Lösungsmittelgemische aus Wasser und/oder organischen Lösungsmitteln eingesetzt werden.

Das filmbildende organische Polymer wird vorzugsweise in einer Menge von 0,001 bis 2 g/m², vorzugsweise 0,1 bis 1 g/m², eingesetzt.

### Beispiel 1

Auf eine vorderseitig mit einer Haftschicht versehenen transparenten Triacetat-Unterlage von 125 µm Stärke wird nach Aufbringen der Antistatik- und Deckschicht auf der Rückseite gemäß nachstehenden Beispielen auf die Vorderseite ein lichtempfindlicher Mehrschichtenaufbau der nachstehenden Zusammensetzung gegossen.

Die Mengenangaben beziehen sich jeweils auf 1 m²; der Silberhalogenid-Auftrag entspricht der äquivalenten Menge AgNO₃; alle Silberhalogenid-Emulsionen sind mit 0,1 g 4-Hydroxy-6-methyl-1,3,3a,7-tetra-azainden pro 100 g AgNO₃ stabilisiert.

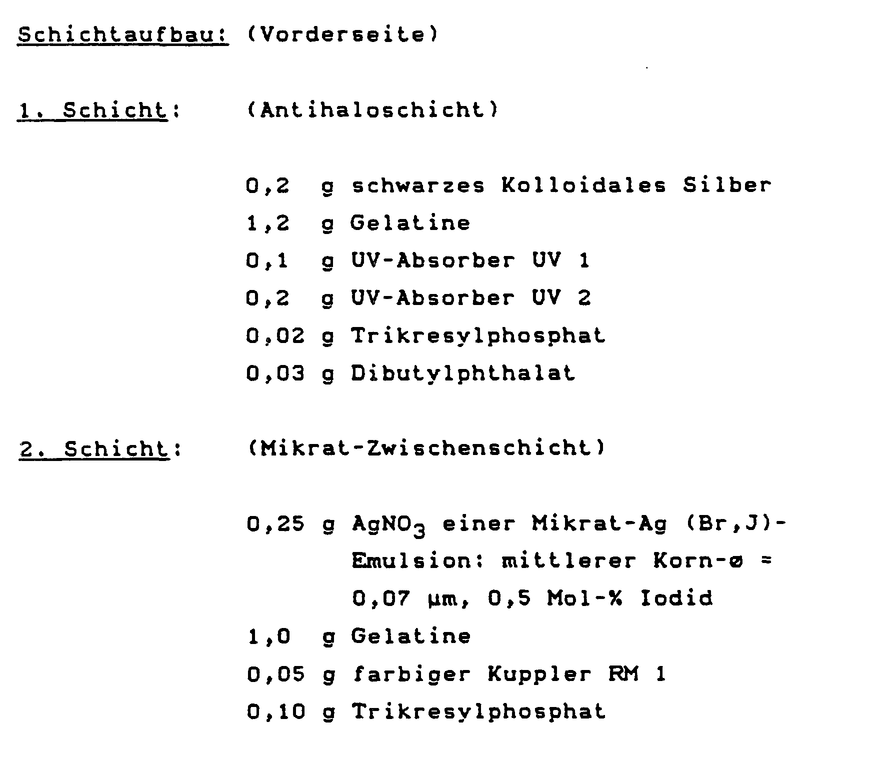

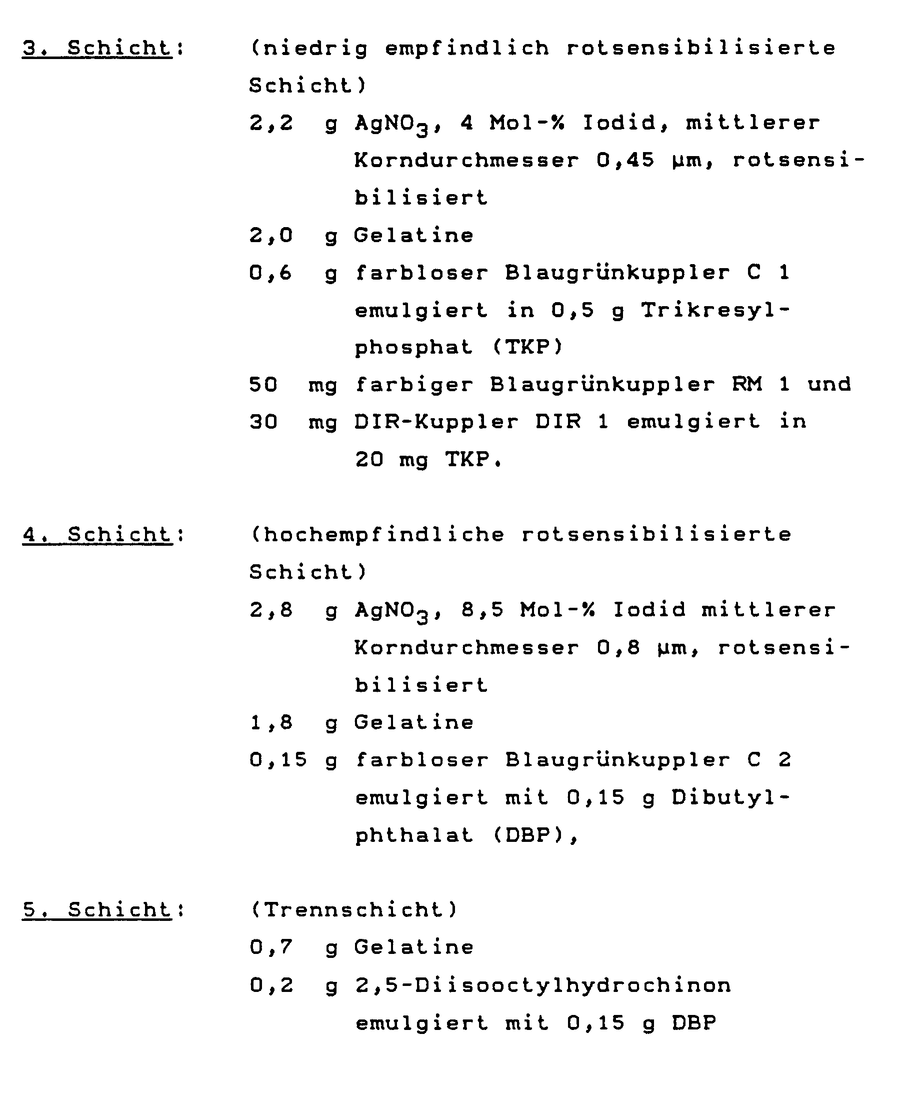

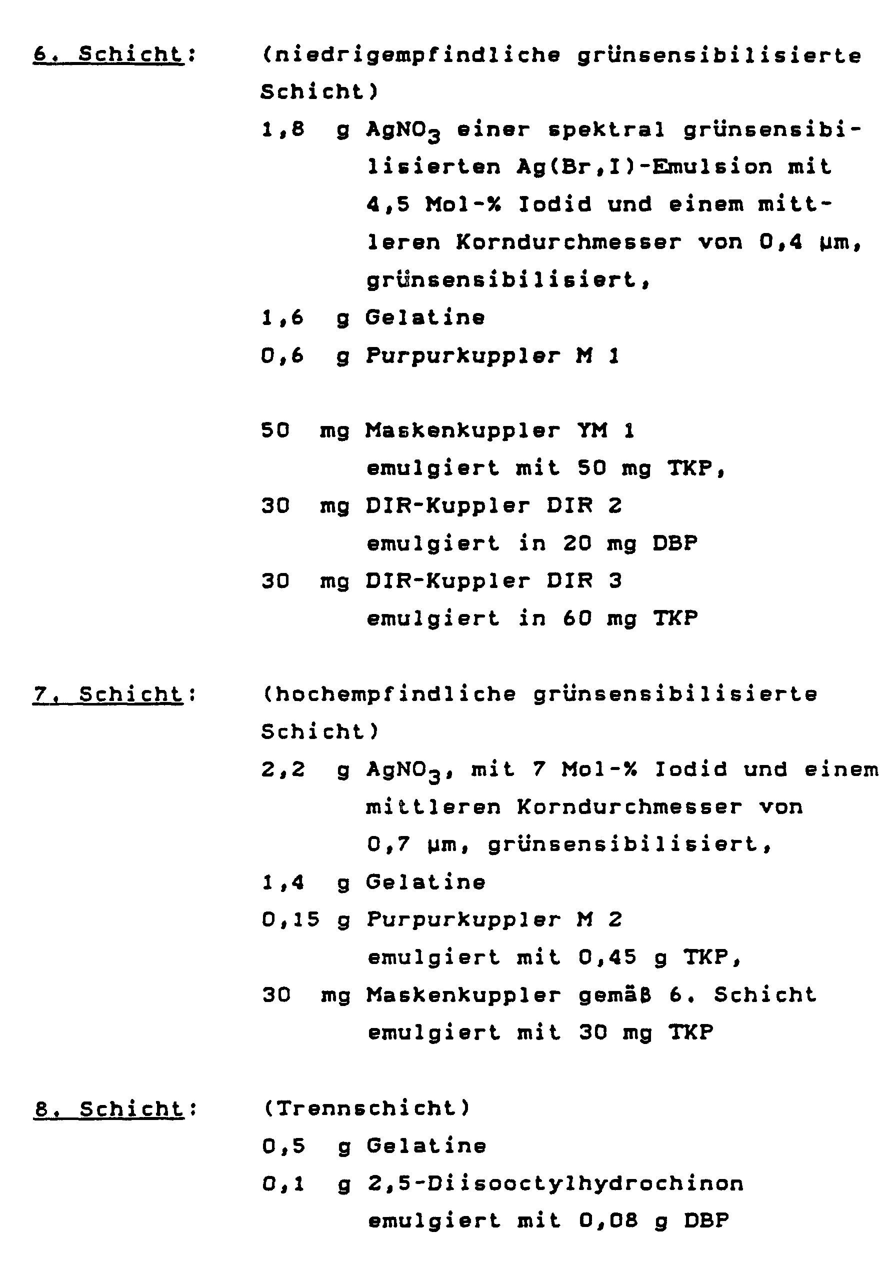

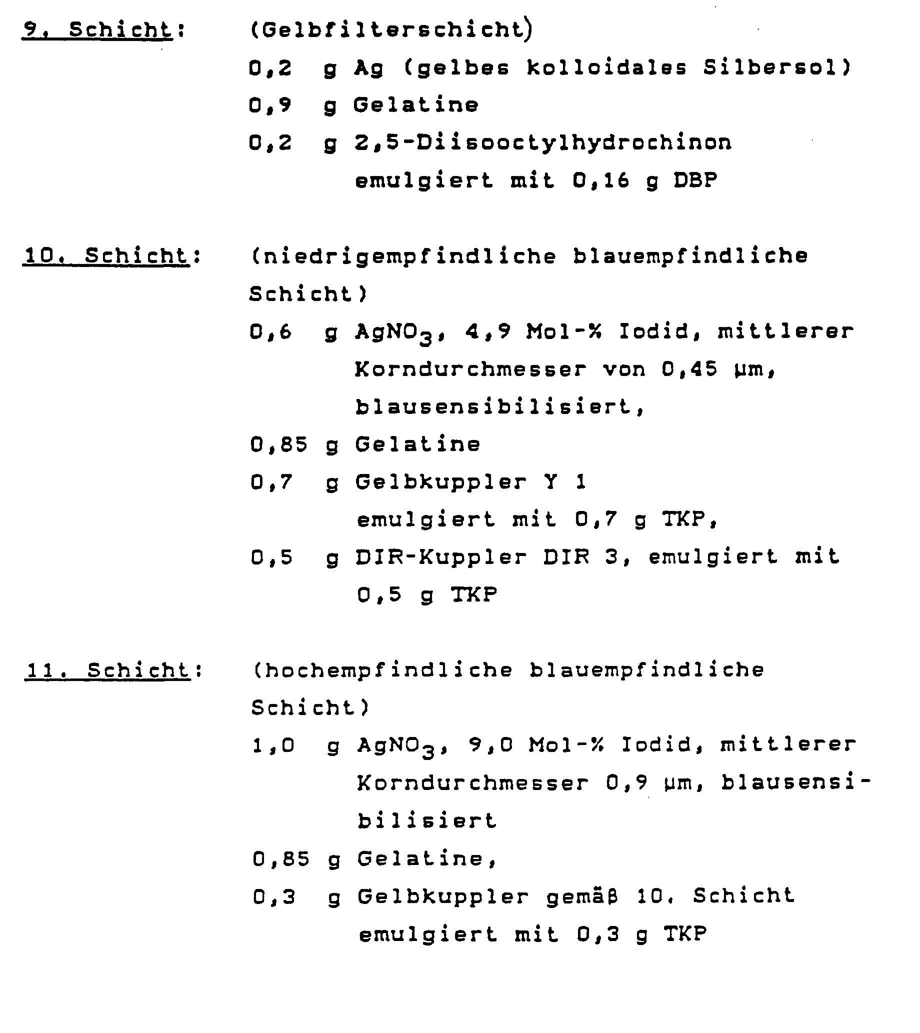

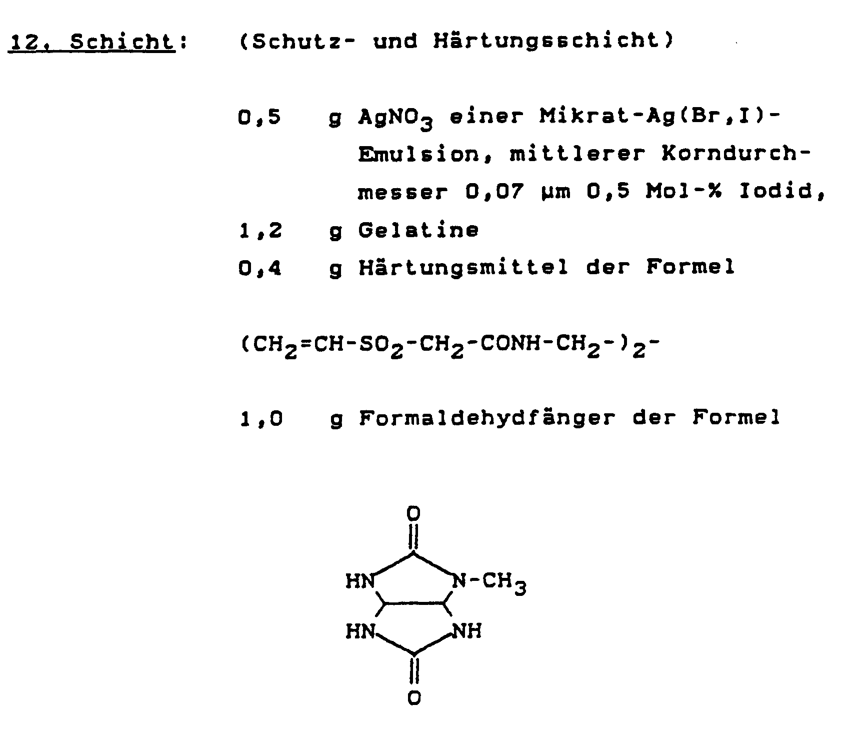

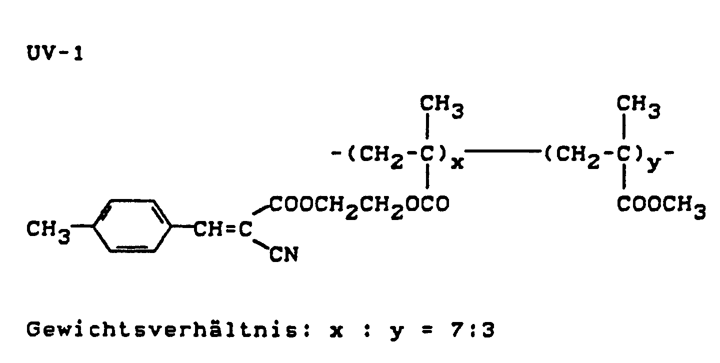

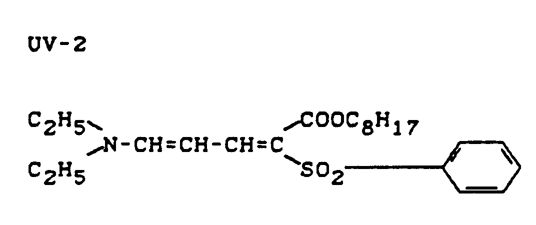

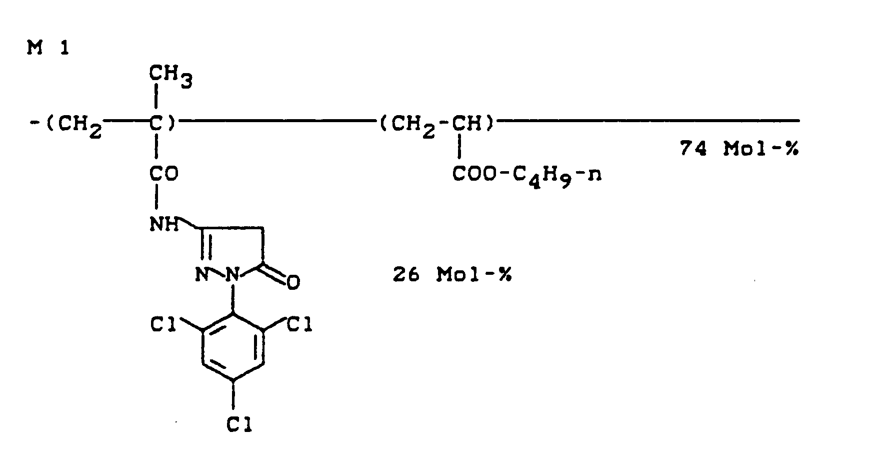

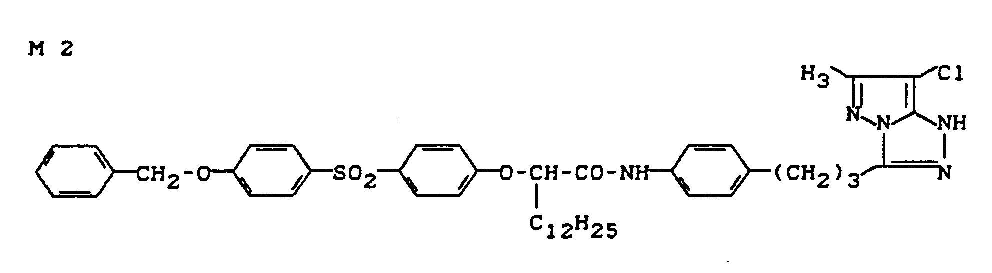

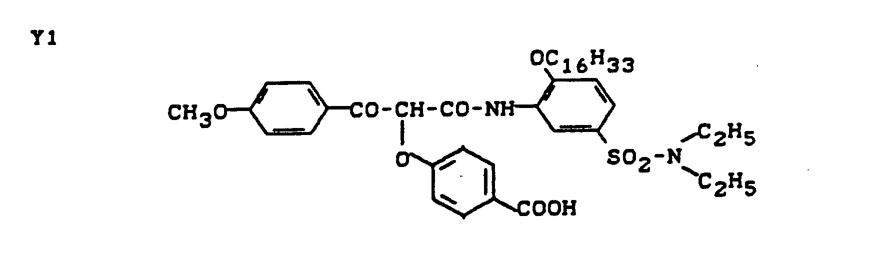

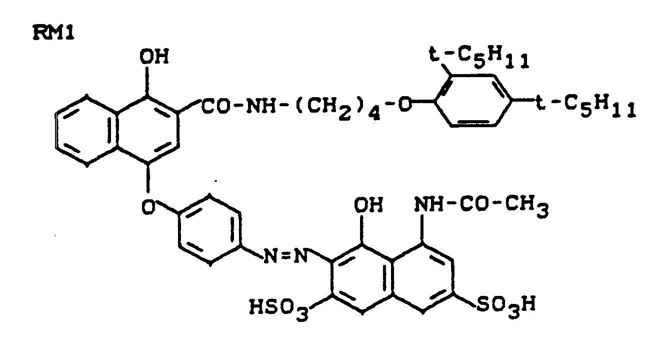

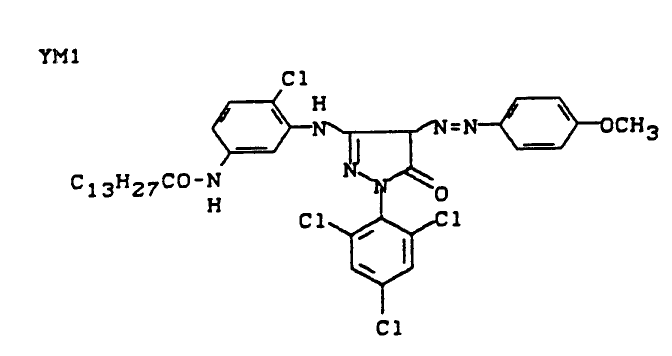

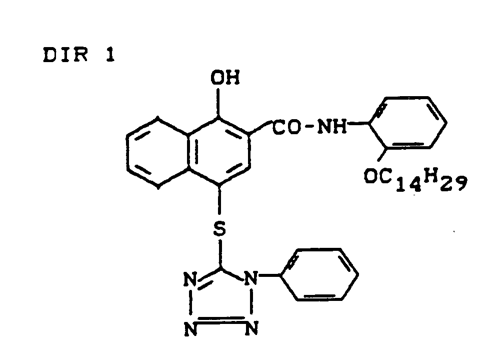

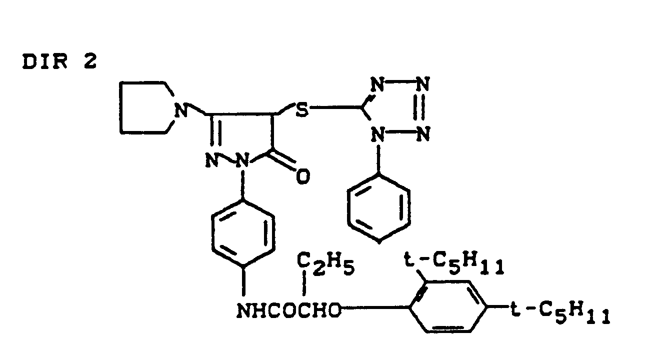

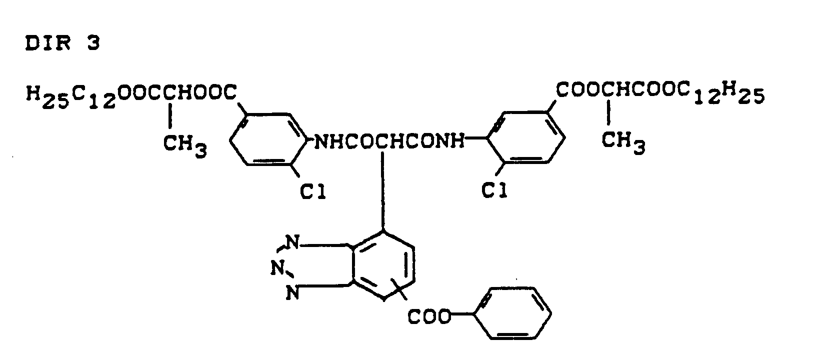

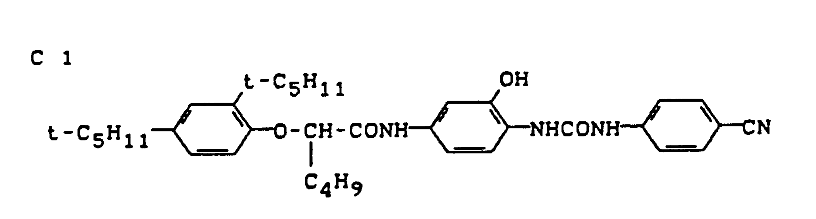

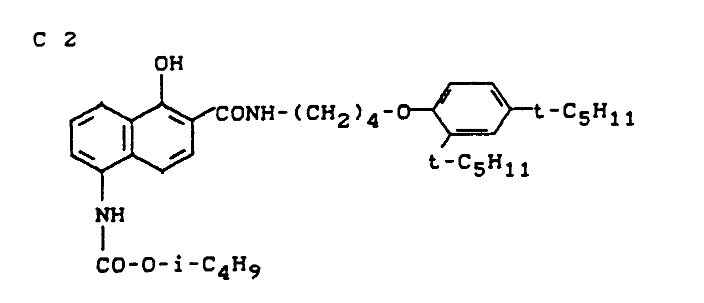

Die Gesamtschichtdicke (trocken) des Color-Aufbaus beträgt 24 µm.

### Herstellung der 3,4-Polyethylendioxythiophen-polystyrolsulfonatlösung 1 (PEDT/PSS-1)

In die Lösung von 20 g Polystyrolsulfonsäure (Mn ^{∼} 40 000); 5,6 g 3,4-Ethylendioxy-thiophen; 2,7 g Kaliumperoxidisulfat (= 10 mMol) und 25 mg Eisen-III-sulfat in 1100 ml vollentsalztem Wasser wird 24 Stunden bei Raumtemperatur unter Rühren Luft durchgeleitet. Die blaue Lösung wird anschließend durch ein Filtertuch filtriert und hat einen Feststoffgehalt von 2,1 Gew.-%.

### Herstellung der Polythiophen-polystyrolsulfonatlösung 2 (PEDT/PSS 2)

Eine Lösung von 20 g Polystyrolsulfonsäure (Mn ^{∼} 40 000); 5,6 g 3,4-Ethylendioxythiophen; 8,1 g Kaliumperoxidisulfat (30 mMol) und 50 mg Eisen-III-sulfat (Fe-Gehalt 22 Gew.-%) in 966 ml vollentsalztem Wasser wird bei Raumtemperatur 24 Stunden gerührt. Man erhält eine blaugefärbte wäßrige Lösung des 3,4-Polyethylendioxythiophens mit einem Feststoffgehalt von 3,2 Gew.-%.

### Entsalzung mittels Ionenaustauscher :

500 ml der obigen PEDT/PSS-Lösung 2 werden mit 250 ml Wasser verdünnt. Nach Zugabe von 40 g schwach basischen Ionenaustauscher und 40 g stark saurem Ionenaustauscher wird die Lösung 8 Stunden bei Raumtemperatur gerührt.

Danach wird der Ionenaustauscher abfiltriert und man erhält entsalzte PEDT/PSS-Lösungen mit einem Feststoffgehalt von 1,6 Gew.-%. Die Lösung enthält nur noch 0,4 g Kaliumionen/l und 5 mg Sulfationen/l, d.h. die Kaliumionenmenge wird durch den Ionenaustauscher um 74 % und die Sulfationenmenge um 99 % reduziert.

### Herstellung der Antistatikschichten 1-4

Gemäß Tabelle 1 werden die obigen Antistatiklösungen durch Mischen der PEDT/PSS-Lösungen 1 bzw. 2 mit den entsprechenden Mengen Wasser, Methanol, Aceton und gegegebenenfalls Silan gemischt und die durch ein Faltenfilter filtrierte Lösung aus einer Tauchschale mittels einer Anspülwalze auf eine unsubstrierte Cellulosetriacetat-Unterlage aufgebracht und bei 60-70°C getrocknet. Der Naßauftrag liegt bei ca. 25 ml/m².

### Herstellung der Deckschichten 1-3

Gemäß Tabelle 2 wird - sofern Silan verwendet wird - zunächst das Aceton mit Glycidoxypropyl-trimethoxysilan gemischt und danach eine Cellulosediacetatlösung in Aceton unter Rühren zugegeben. Sodann versetzt man die Mischung mit der jeweiligen Menge Methanol und zuletzt mit der angegebenen Mischung aus Wasser und der PE-Dispersion. Diese Lösung wird analog zur Antistatiklösung auf die Antistatikschicht aufgebracht und wie diese getrocknet. Naßauftrag ca. 15 µ.

**Tabelle 1**

| Antistatikschicht | 1 | 2 | 3 | 4 | 5 |
|---|---|---|---|---|---|
| PEDT/PSS-Lösung 1 [ml] | 14,3 | 14,3 | - | - | - |
| PEDT/PSS-Lösung 2 [ml] | - | - | 20 | 9,3 | 4,7 |
| Wasser [ml] | 10,7 | 10,7 | 5 | 15,7 | 18,3 |
| Methanol [ml] | 10 | 10 | 10 | 10 | 10 |
| Aceton [ml] | 65 | 62 | 65 | 65 | 58 |
| Epoxisilan [ml] (1 Gew.-% in Aceton) | - | 3 | - | - | 7 |
| Naßauftrag [ml/m²] | 65 | 25 | 25 | 25 | 25 |

**Tabelle 2**

| Deckschicht | 1 | 2 | 3 |
|---|---|---|---|
| Cellulosediacetat [ml] 10 Gew.-% in Aceton | 20 | 20 | 20 |
| Aceton [ml] | 630 | 610 | 530 |
| Methanol [ml] | 330 | 330 | 330 |
| Wasser [ml] | 17 | 17 | 17 |
| Epoxisilan [ml] (1 Gew.-% in Aceton) | - | 20 | 100 |
| Polyethylendispersion (5 Gew.-% in H₂O) [ml] | 3 | 3 | 3 |
| Naßauftrag [ml/m²] | 15 | 15 | 15 |

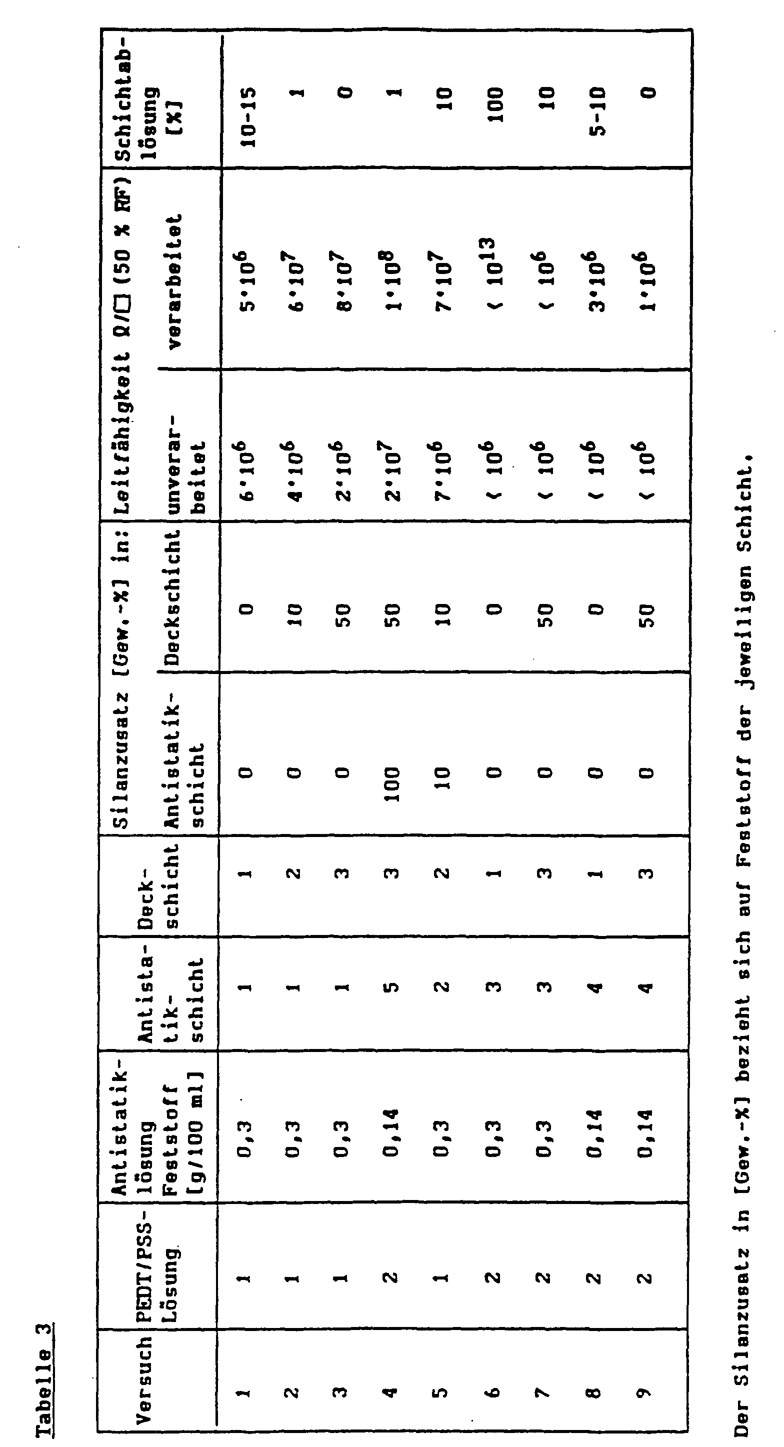

Kombiniert man nun die Antistatikschichten 1-5 mit den Deckschichten 1-3 gemäß der in Tabelle 3 aufgeführten Folge, so sieht man folgendes:

Der Zusatz von Silan zur Deckschicht verbessert stark die Schichthaftung und reduziert bei entsprechender Zusatzmenge die Schichtablösung auf null (s. Tab. 3, Vers. 3 und 9). Die Leitfähigkeit der Schicht bleibt dabei auch nach der Verarbeitung erhalten. Der Zusatz des Silans nur zur Antistatikschicht statt zur Deckschicht verschlechtert dagegen die Schichthaftung, bzw. erhöht die Schichtablösung (Tab. 3, Vers. 4 gegen 1+2). Gibt man das Silan zusätzlich auch zur Deckschicht, beobachtet man sofort wieder eine Verbesserung der Schichthaftung (Tab. 3, Vers. 5).

Die Versuche 2 bis 5, 7 und 9 sind erfindungsgemäß, die Versuche 1, 6 und 8 sind Vergleichsversuche.

### Beispiel 2

Bei Verwendung von PET-Unterlagen statt Triacetat wurden zur Erzielung haftfester PEDT/PSS-Schichten die folgenden Lösungen eingesetzt:

### Herstellung der Polythiophen-polystyrolsulfonatlösung (PEDT- PSS 3)

Eine Lösung von 20 g Polystyrolsulfonsäure (Mn=40000); 5,6 g 3,4-Ethylendioxythiophen; 13 g Kaliumperoxydisulfat und 100 mg Eisen-III-sulfat (9 aq.) gelost in vollentsalztem Wasser zu 1 l Gesamtlösung wird bei Raumtemperatur 24 Stunden gerührt. Man erhält eine blaugefärbte wäßrige Lösung des 3,4-Polyethylendioxythiophens mit einem Feststoffgehalt von 3,8 Gew.-%.

### Entsalzung mittels Ionenaustauscher (PEDT/PSS 4)

1000 ml der obigen PEDT/PSS-Lösung werden mit 1000 ml Wasser verdünnt. Nach Zugabe von 100 g schwach basischem Ionenaustauscher und 100 g stark saurem Ionenaustauscher wird die Lösung 6 Stunden bei Raumtemperatur gerührt. Danach wird der Ionenaustauscher abfiltriert und man erhält eine entsalzte PEDT/PSS-Lösung mit einem Feststoffgehalt von 1,28 Gew.-%. Die Lösung enthält nur noch 0,4 g Kaliumionen pro Liter und ist praktisch frei von Sulfationen.

### Herstellung der Antistatikschichten 6-9

430 g der obigen PEDT/PSS-4-Lösung werden mit 5070 ml Wasser gemischt. Diese Lösung wird unterteilt und den Teillösungen wird gemäß Tabelle 4 Glycidoxypropyl-trimethoxysilan zugefügt.

Auf eine Polyethylen-terephthalat-Unterlage (PET), die mit einer Haftschicht aus einem Terpolymerlatex aus Vinylidenchlorid/Methacrylat/Itaconsäure und kolloidaler Kieselsäure mit einer Oberfläche von 100 m²/g versehen ist, bringt man dan diese Teillösungen gemäß Tabelle 4 auf.
- Naßauftrag :: 20 ml/m²
- Gießgeschwindingkeit :: 10 m/min
- Trockentemperatur :: 100° C

| ANTISTATIKSCHICHT | TROCKENFILMDICKE (mg/m²) | | |
|---|---|---|---|
| | PEDT/ PSS | Silan | Gew.-% |
| 6 | 20 | - | 0 |
| 7 | 20 | 2,5 | 11 |
| 8 | 20 | 5 | 20 |
| 9 | 20 | 10 | 33 |

Die Gew.-% Silan beziehen sich auf Feststoff der Schicht.

Parallel zu den Antistatikschichtlösungen 6-9 werden die in Tabelle 5 aufgeführten Deckschichtlösungen 4-6 hergestellt. Sie bestehen aus einer Lösung von Polymethylmethacrylat in Aceton/Methoxypropanol 80/20 und werden mit einer Trockenfilmdicke von 0,5 g/m² aufgebracht. Sie enthalten zusätzlich unterschiedliche Mengen Glycidoxypropyl-trimethoxysilan gemäß Tabelle 5.
- Naßauftrag :: 20 ml/m²
- Gießgeschwindigkeit :: 8 m/min
- Trockentemperatur :: 120° C

**Tabelle 5**

| DECKSCHICHT | TROCKENFILMDICKE (mg/m²) | |
|---|---|---|
| | PMMA | Silan |
| 4 | 500 | - |
| 5 | 500 | 50 |
| 6 | 500 | 250 |

Kombiniert man nun die Antistatikschichten 6-9 mit den Deckschichten 4-6 gemäß Tabelle 6, so sieht man folgendes:

Der Zusatz des Epoxysilans nur zur Antistatikschicht verbessert nur die Schichthaftung der Antistatikschichten ohne Deckschicht.

Der Zusatz des Epoxisilans nur zur Deckschicht verbessert die Deckschichthaftung auf der Antistatikschicht.

Die Naßhaftung von Antistatikschicht und Deckschicht ist gut, wenn man Epoxisilan der Antistatikschicht und der Deckschicht zusetzt.

In der nachfolgenden Tabelle 6 bedeuten:
- A.S. =: Antistatikschicht
- D.S. =: Deckschicht
- Ω/□ =: Widerstand/Quadrat
- τ =: Entladungszeit

Je niedriger die Entladungszeit ist, umso besser sind antistatischen Eigenschaften der betreffenden Probe.

Die Versuche 6, 7, 9, 10, 12, 13, 15 und 16 sind erfindungsgemäß; die übrigen Versuche sind Vergleichsversuche.

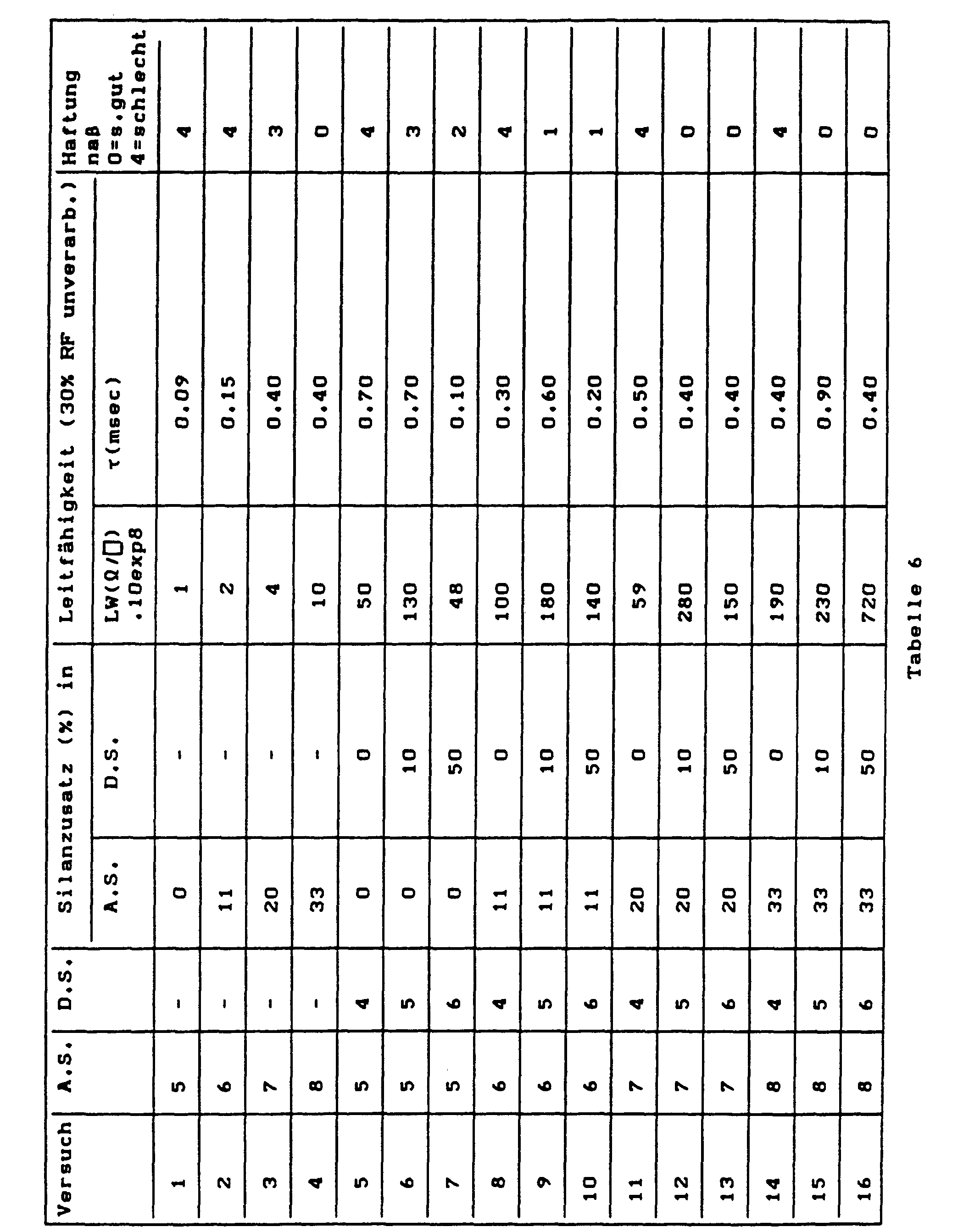

## Patentansprüche

1. Antistatisch ausgerüstete Kunststoff-Formteile, die auf der antistatisch auszurüstenden Oberfläche wenigstens zwei Schichten tragen, wobei eine näher zur Kunststoffoberfläche liegende Schicht eine Zubereitung eines Polythiophens, das aus Struktureinheiten der Formel 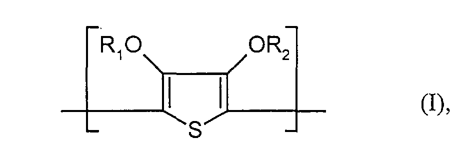 aufgebaut ist, in der
R₁ und R₂ unabhängig voneinander für Wasserstoff oder eine C₁-C₄-Alkylgruppe stehen oder zusammen einen gegebenenfalls substituierten C₁-C₄-Alkylen-Rest, vorzugsweise einen gegebenenfalls durch Alkylgruppen substituierten Methylen-, einen gegebenenfalls durch C₁-C₁₂-Alkyl- oder Phenylgruppen substituierten Ethylen-1,2-Rest, einen Propylen-1,3-Rest oder einen Cyclohexylen-1,2-Rest bilden,
und eines Polyanions, eine entfernter liegende Schicht ein filmbildendes Polymer und beide Schichten oder wenigstens die entfernter liegende Schicht ein Silan der Formel (II)
X₄₋ₘ-Si(OR₃)ₘ (II)
worin
R₃ ein Wasserstoffatom, einen aliphatischen Kohlenwasserstoffrest mit weniger als 10 Kohlenstoffatomen oder einen Acylrest mit weniger als 10 Kohlenstoffatomen,
X 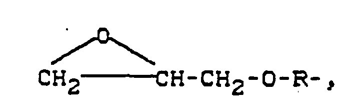 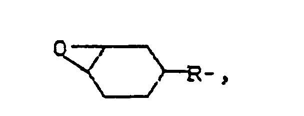 NH₂-R-, NH₂-CH₂-CH₂-NH-R- oder R-,
R einen Kohlenwasserstoffrest mit 1 bis 20 C-Atomen und
m 1 bis 3 bedeuten.
enthält.

2. Kunststoff-Formteile nach Anspruch 1, dadurch gekennzeichnet, daß das Epoxysilan einer der Formeln 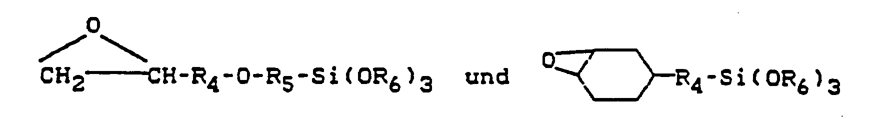 wobei
R₄ und R₅ unabhängig voneinander Alkylenreste mit 1 bis 4 Kohlenstoffatomen bedeuten, und
R₆ ein Wasserstoffatom oder einen Alkylrest mit 1 bis 10 Kohlenstoffatomen darstellt, entspricht.

3. Fotografische Materialien mit einem Kunststoffträger, der auf der einen Seite wenigstens eine Silberhalogenidemulsionsschicht enthält, dadurch gekennzeichnet, daß er auf der anderen Seite die wenigstens zwei Schichten gemäß Anspruch 1 enthält.

4. Fotografische Materialien nach Anspruch 3, dadurch gekennzeichnet, daß der Kunststoffträger ein transparenter Cellulosetriacetat- oder Polyesterfilm ist.

## Claims

1. Plastic mouldings which have been provided with an antistatic finish and which carry at least two layers on the surface to be provided with the antistatic finish, where a layer lying closer to the plastic surface comprises a preparation of a polythiophene built up from structural units of the formula 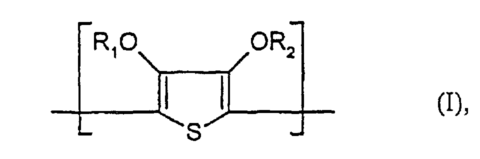 in which
R₁ and R₂, independently of one another, are hydrogen or a C₁-C₄-alkyl group or together are an optionally substituted C₁-C₄-alkylene radical, preferably a methylene radical which is optionally substituted by alkyl groups, a 1,2-ethylene radical which is optionally substituted by C₁-C₁₂-alkyl or phenyl groups, a 1,3-propylene radical or a 1,2-cyclohexylene radical,
and a polyanion, a more remote layer comprises a film-forming polymer, and both layers or at least the more remote layer comprise a silane of the formula (II)
X₄₋ₘ-Si(OR₃)ₘ (II)
in which
R₃ is a hydrogen atom, an aliphatic hydrocarbon radical having less than 10 carbon atoms or an acyl radical having less than 10 carbon atoms,
X is 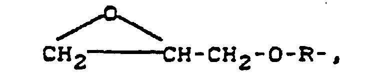 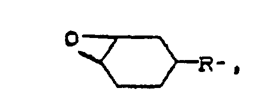 NH₂-R-, NH₂-CH₂-CH₂-NH-R- or R-,
R is a hydrocarbon radical having 1 to 20 carbon atoms, and
m is from 1 to 3.

2. Plastic mouldings according to Claim 1, characterized in that the epoxysilane corresponds to one of the formulae 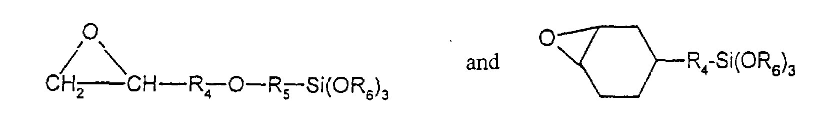 where
R₄ and R₅, independently of one another, are alkylene radicals having 1 to 4 carbon atoms, and
R₆ is a hydrogen atom or an alkyl radical having 1 to 10 carbon atoms.

3. Photographic materials having a plastic support which contains at least one silver-halide emulsion layer on one side, characterized in that it contains at least two layers according to Claim 1 on the other side.

4. Photographic materials according to Claim 3, characterized in that the plastic support is a transparent cellulose triacetate or polyester film.

## Revendications

1. Pièces moulées en matière plastique munies d'un revêtement antistatique, qui portent au moins deux couches sur la surface qui doit être munie d'un revêtement antistatique, une couche disposée plus près de la surface en matière plastique contenant une formulation d'un polythiophène qui est composé d'unités de structure répondant à la formule 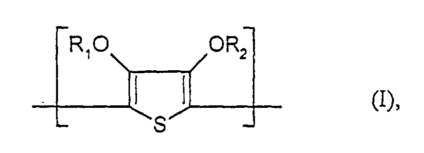 dans laquelle
R₁ et R₂ représentent indépendamment l'un de l'autre un atome d'hydrogène ou un groupe alkyle en C₁-C₄ ou bien forment ensemble un radical alkylène en C₁-C₄, le cas échéant substitué, de préférence un radical méthylène portant le cas échéant un ou plusieurs substituants alkyle, un radical éthylène-1,2 portant le cas échéant un ou plusieurs substituants alkyle en C₁-C₁₂ ou phényle, un radical propylène-1,3 ou un radical cyclohexylène-1,2,
et d'un polyanion, une couche plus éloignée contenant un polymère filmogène et les deux couches, ou au moins la couche la plus éloignée contenant un silane répondant à la formule (II)
X₄₋ₘ-Si(OR₃)ₘ (II)
dans laquelle
R₃ représente un atome d'hydrogène, un radical d'hydrocarbure aliphatique contenant moins de 10 atomes de carbone ou un radical acyle contenant moins de 10 atomes de carbone,
X représente 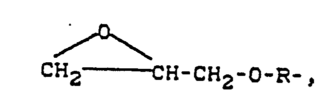 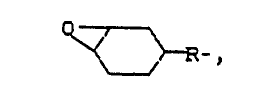 NH₂-R-, NH₂-CH₂-CH₂-NH-R- ou R-,
R représente un radical d'hydrocarbure contenant de 1 à 20 atomes de carbone, et
m représente de 1 à 3.

2. Pièces moulées en matière plastique selon la revendication 1,
caractérisées en ce que l'époxysilane répond à une des formules 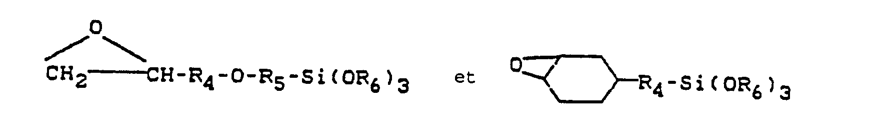 dans lesquelles
R₄ et R₅ représentent, indépendamment l'un de l'autre, des radicaux alkylène contenant de 1 à 4 atomes de carbone, et
R₆ représente un atome d'hydrogène ou un radical alkyle contenant de 1 à 10 atomes de carbone.

3. Matériau photographique comprenant un support en matière plastique qui contient, sur un de ses côtés, au moins une couche d'émulsion à l'halogénure d'argent, caractérisé en ce qu'il contient, sur l'autre côté, les couches au moins au nombre de deux selon la revendication 1.

4. Matériau photographique selon la revendication 3, caractérisé en ce que le support en matière plastique est un film transparent de triacétate de cellulose ou de polyester.
